# EUROPEAN PATENT APPLICATION

(11) **EP 4 734 491 A1**
(43) Date of publication of application: **29.04.2026**
(21) Application number: 24208979.5
(22) Date of filing: 25.10.2024
(51) Int. Cl.: H04M 1/724, H04M 1/72457, H04M 1/72409, H04M 1/72448, H04M 1/72454, H04M 1/72463

(54) **MOBILE DEVICE AND OPERATING METHOD THEREOF**

(71) Applicant: NXP B.V., 5656 AG Eindhoven (NL)
(72) Inventor: Haselsteiner, Ernst, 5656 AG Eindhoven (NL)
(74) Representative: Krott, Michel

(57) **Abstract**

In accordance with a first aspect of the present disclosure, a mobile device is provided, comprising: a localization unit configured to determine a location of the mobile device within a predefined space; a user interface configured to operate in different modes of operation; a processing unit configured to cause the user interface to operate in a specific one of said different modes of operation in dependence on the location determined by the localization unit. In accordance with further aspects of the present disclosure, a corresponding method of operating a mobile device is conceived, and a computer program for carrying out said method is provided.

## Description

### TECHNICAL FIELD

The present disclosure relates to a mobile device. Furthermore, the present disclosure relates to a corresponding method of operating a mobile device, and to a corresponding computer program.

### BACKGROUND

Mobile devices, such as smartphones and tablets, may be used in spaces in which varying requirements may apply to their functionality, depending on the precise location of the mobile device within such a space. For example, in a space within a vehicle, a mobile device may either be used by a driver or by a passenger. In such a case, different requirements may apply to the user interface of such a device. In particular, to meet given safety requirements, the user interface may have to be adapted when the mobile device is being used by a driver. Furthermore, in a space within a building, different requirements may apply to the user interface of a mobile device, for example depending on the type of external device which with the mobile device should interact, or depending on the room in which the mobile device is being used.

### SUMMARY

In accordance with a first aspect of the present disclosure, a mobile device is provided, comprising: a localization unit configured to determine a location of the mobile device within a predefined space; a user interface configured to operate in different modes of operation; a processing unit configured to cause the user interface to operate in a specific one of said different modes of operation in dependence on the location determined by the localization unit.

In one or more embodiments, the localization unit is configured to determine said location by performing ultra-wideband (UWB) ranging operations with one or more external UWB communication devices installed within the predefined space.

In one or more embodiments, the specific mode of operation is a mode in which the user interface requires less user interaction than in other modes of operation.

In one or more embodiments, the specific mode of operation is a mode in which the user interface presents enlarged visual elements or buttons to a user.

In one or more embodiments, the specific mode of operation is a mode in which the user interface produces audible output instead of, or in addition to, visual output.

In one or more embodiments, the processing unit is further configured to cause the mobile device to be paired with an external device, in particular with an external communication interface, in dependence on the location determined by the localization unit.

In one or more embodiments, the mobile device further comprises a movement determination unit configured to determine whether the predefined space in which the mobile device is located is a space within a moving object, in particular within a moving vehicle.

In one or more embodiments, the movement determination unit comprises a global positioning system (GPS) unit and/or an accelerometer.

In one or more embodiments, the predefined space is a space within a vehicle.

In one or more embodiments, the localization unit is configured to determine whether the location of the mobile device is a driver location or a passenger location, and wherein the processing unit is configured to cause the user interface to operate in a safety mode of operation if the determined location is said driver location.

In one or more embodiments, the predefined space is a space within a building.

In one or more embodiments, the mobile device is implemented as a smartphone or a tablet.

In accordance with a second aspect of the present disclosure, a method of operating a mobile device is conceived, comprising: determining, by a localization unit included in the mobile device, a location of the mobile device within a predefined space; causing, by a processing unit included in the mobile device, a user interface included in the mobile device to operate in a specific one of different modes of operation in dependence on the location determined by the localization unit.

In one or more embodiments, the localization unit determines said location by performing ultra-wideband (UWB) ranging operations with one or more external UWB communication devices installed within the predefined space.

In accordance with a third aspect of the present disclosure, a computer program is provided, comprising executable instructions which, when executed by a mobile device, cause said mobile device to carry out a method of the kind set forth.

### DESCRIPTION OF DRAWINGS

Embodiments will be described in more detail with reference to the appended drawings.
Fig. 1 shows an illustrative embodiment of a mobile device.
Fig. 2 shows an illustrative embodiment of a method of operating a mobile device.
Fig. 3 shows an illustrative embodiment of a vehicle.

### DESCRIPTION OF EMBODIMENTS

As mentioned above, mobile devices may be used in spaces in which varying requirements may apply to their functionality, depending on the location of the mobile device within such a space.

Now discussed are a mobile device, a corresponding operating method and a corresponding computer program, which facilitate adapting the functionality of a user interface of the mobile device, in order to meet location-specific requirements within a predefined space in which the mobile device is used.

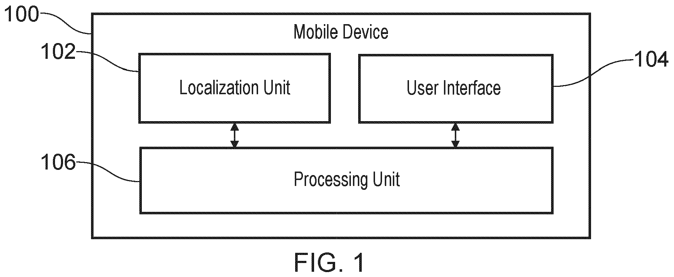

**Fig. 1** shows an illustrative embodiment of a mobile device 100. The mobile device 100 comprises a localization unit 102, a user interface 104, and a processing unit 106. The localization unit 102 is configured to determine a location of the mobile device 100 within a predefined space (not shown). The user interface 104 is configured to operate in different modes of operation. Furthermore, the processing unit 106 is configured to cause the user interface 104 to operate in a specific one of said different modes of operation in dependence on the location determined by the localization unit 102. In this way, the mode of operation of the user interface 104 may easily be adapted to meet location-specific requirements within the predefined space. It is noted that, although the localization unit 102, user interface 104 and processing unit 106 are shown as separate units, some or all of these units may be integrated into a single physical component of the mobile device 100. Furthermore, it is noted that the specific mode of operation in which the user interface 104 is caused to operate may, for example, be a mode which has been selected from a predefined set of modes, or a mode in which various user interface elements are dynamically combined and presented to the user in a specific way.

In one or more embodiments, the localization unit is configured to determine said location by performing ultra-wideband (UWB) ranging operations with one or more external UWB communication devices installed within the predefined space. In this way, the location of the mobile device may be easily be determined, with a relatively high accuracy. In one or more embodiments, the specific mode of operation is a mode in which the user interface requires less user interaction than in other modes of operation. In this way, the safety level may be increased, for example when the mobile device is used at locations where the interaction with the user interface would lead to dangerous situations. It is noted that the user interface may achieve a reduction of the user interaction in different ways, for example by requiring less touch-based input from the user, and/or by displaying less visual details to the user. In one or more embodiments, the specific mode of operation is a mode in which the user interface presents enlarged visual elements or buttons to a user. In this way, the safety level may be further increased, because it may become easier to interact with the user interface. In one or more embodiments, the specific mode of operation is a mode in which the user interface produces audible output instead of, or in addition to, visual output. In this way, the safety level may be further increased, because the user may be less visually distracted by the user interface.

In one or more embodiments, the processing unit is further configured to cause the mobile device to be paired with an external device, in particular with an external communication interface, in dependence on the location determined by the localization unit. In this way, the pairing of the mobile device with an external device, such as an external communication interface (e.g., a handsfree phone system), may be automated more easily. In one or more embodiments, the mobile device further comprises a movement determination unit configured to determine whether the predefined space in which the mobile device is located is a space within a moving object, in particular within a moving vehicle. In this way, a more precise safety control may be facilitated, in the sense that the movement of the mobile device may be taken into account for adapting the functionality of the user interface (e.g., whether or not the mobile device is within a moving vehicle). In a practical implementation, the movement determination unit comprises a global positioning system (GPS) unit and/or an accelerometer.

In one or more embodiments, the predefined space is a space within a vehicle. Thus, the mode of operation of the user interface may easily be adapted to meet location-specific requirements within a vehicle. In one or more embodiments, the localization unit is configured to determine whether the location of the mobile device is a driver location or a passenger location, and the processing unit is configured to cause the user interface to operate in a safety mode of operation if the determined location is said driver location. In this way, the vehicle may be driven more safely. For instance, the safety mode of operation may be a mode in which the user interface requires less user interaction than in other modes of operation, in which the user interface presents enlarged visual elements or buttons to a user, or in which the user interface produces audible output instead of, or in addition to, visual output.

In one or more embodiments, the predefined space is a space within a building. Thus, the mode of operation of the user interface may easily be adapted to meet location-specific requirements within a building. For instance, the user interface may adapt to whether the mobile device is in close proximity of a TV, or the user interface may anticipate usual operations which a user carries out in different rooms of a house. Furthermore, in one or more embodiments, the mobile device is implemented as a smartphone or a tablet. Thus, the mode of operation of a user interface of a smartphone or a tablet may easily be adapted to meet requirements specific to the location of said smartphone or table within a predefined space.

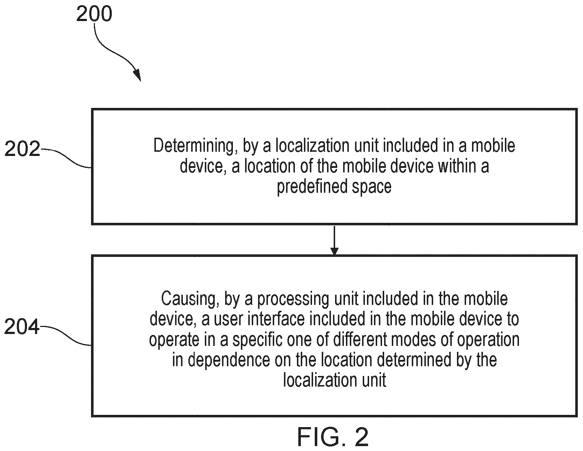

Fig. 2 shows an illustrative embodiment of a method 200 of operating a mobile device. The method 200 comprises the following steps. At 202, a localization unit included in the mobile device determines a location of the mobile device within a predefined space. At 204, a processing unit included in the mobile device causes a user interface included in the mobile device to operate in a specific one of different modes of operation in dependence on the location determined by the localization unit. As explained with reference to the corresponding mobile device shown in Fig. 1, the mode of operation of the user interface may thereby easily be adapted to meet location-specific requirements within the predefined space.

In accordance with the present disclosure, the functionality of a mobile device's user interface may easily be adapted to meet location-specific requirements within a predefined space in which the mobile device is used, by changing the mode of operation of the user interface in dependence on said location. For example, the user interface of a mobile phone should behave in a different way depending on the location within a moving vehicle. In case the vehicle is driving and the driver uses the mobile phone, a very simple user interface with large buttons is useful for increasing both comfort and safety. Some functions (e.g., typing) may even be blocked to further increase the safety level. However, when the same phone is used by a passenger in the front or in the back, the full user interface should be available. By applying localization within the vehicle, such user interface adaptations may easily be automated. Additionally, the knowledge of the location of the mobile phone may also be used to optimize the connections which are established with the phone's environment. More specifically, the mobile phone may be paired more easily to this environment.

Furthermore, the mobile device may use a GPS unit and/or an accelerometer to know its rough location and to know whether the vehicle is moving or not. A more precise localization method, such as a UWB-based localization method, may then be used to determine the phone's relative position within the vehicle with a precision of centimeters. Based on this information the phone knows whether it is used by the driver or by a passenger. In case the phone is used by the driver, a dedicated version of the user interface may be enabled. For example, this dedicated version may be a significantly simplified version of the user interface with large buttons and large fonts. In case of incoming messages, it may be useful to cause the user interface to read them out, instead of displaying them. Also, some functions (e.g., typing a message) may be blocked and only dictation may be allowed to record a message or a response. Furthermore, the vehicle may be able to distinguish between the phone of the driver and phones of passengers. Thereby, the phone of the driver may be automatically selected to be connected to the vehicle's hands-free phone system, for example.

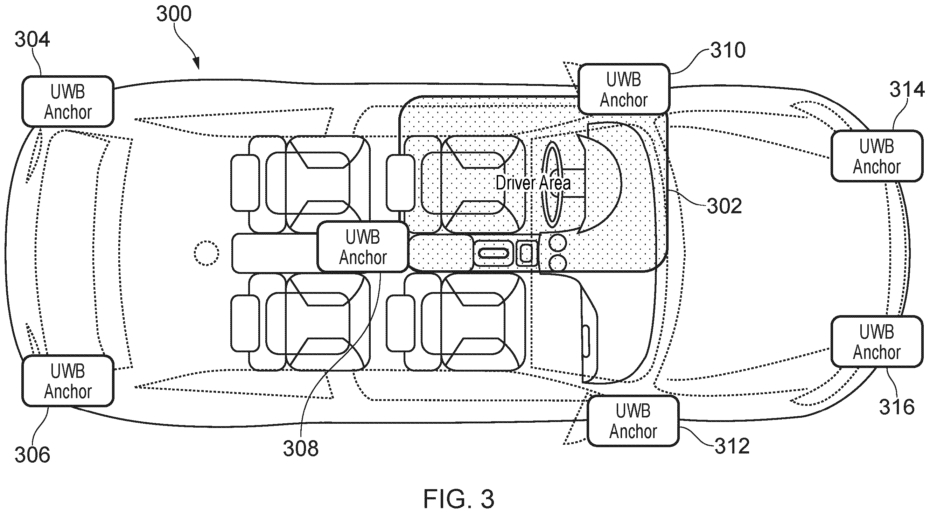

**Fig. 3** shows an illustrative embodiment of a vehicle 300. The vehicle comprises a driver area 302 and a plurality of UWB anchors 304, 306, 308, 310, 312, 314, 316. Using the UWB 304, 306, 308, 310, 312, 314, 316, ranging operations may be performed with a mobile device (not shown) within the vehicle 310. Thereby, it may be determined whether or not the mobile device is located within the driver area 302. If so, the mode of operation of the user interface may be adapted accordingly. For example, as described above, a significantly simplified version of the user interface may be enabled, to increase both comfort and safety.

UWB communication technology is a technology that uses a high signal bandwidth, in particular for transmitting digital data over a wide spectrum of frequency bands with very low power. For example, UWB technology may use the frequency spectrum of 3.1 to 10.6 GHz and may feature a high-frequency bandwidth of more than 500 MHz and very short pulse signals, potentially capable of supporting high data rates. The UWB technology enables a high data throughput for communication devices and a high precision for the localization of devices. In particular, UWB technology may be used for so-called ranging operations, i.e. for determining the distance between communicating devices. Therefore, UWB technology may be used to advantage in various applications, such as automotive applications.

More specifically, UWB technology - also referred to as impulse-radio ultra-wideband (IR-UWB) - is an RF communication technology that uses pulses having a short duration for data communication. An important feature of IR-UWB technology is that it can be used for secure and accurate distance measurements between two or more devices. Typical distance measurement methods are the so-called single-sided two-way ranging (SS-TWR) method and the double-sided two-way ranging (DS-TWR) method. In addition to ranging operations of this kind, UWB devices may also carry out radar operations. Thus, UWB devices may operate in a ranging mode, as well as in a radar mode.

In a ranging mode of operation, frames will typically be exchanged between two devices via at least one antenna on each device, and at least a SS-TWR operation will be carried out (which may also be referred to as a ping-pong operation). In particular, channel impulse responses (CIRs) are estimated on both devices, timestamps will be generated based on the CIRs on both devices, and those timestamps are exchanged. Then, a time of flight (ToF) is calculated based on the timestamps and a range (i.e., a distance) is calculated based on the ToF. Alternatively, a DS-TWR operation may be carried out (which may also be referred to as a ping-pong-ping operation). It is noted that an angle-of-arrival (AoA) mode of operation is similar to a ranging mode, but it involves at least two antennas on one device. In particular, in an AoA mode of operation, two phase values associated with at least two CIRs are calculated on one device. Then, a phase difference of arrival (PDoA) is calculated based on the two phase values, and an AoA is calculated based on the PDoA. An AoA mode of operation may facilitate a more accurate determination of the position of an object, and may thus complement ranging operations performed in the ranging mode. As used in this description, the ranging mode of operation may therefore be extended to include the AoA mode of operation, in the sense that when a device operates in the ranging mode, it may optionally perform additional operations which are typically performed in the AoA mode of operation. Furthermore, as used herein, the ranging mode may include performing operations based on a so-called Time Difference of Arrival (TDoA) technique, instead of a ToF technique. The TDoA technique is particularly suitable for real-time localization operations. Generally speaking, the term "ranging mode" covers all types localization operations based on UWB message exchanges with an external UWB communication device. It is noted that AoA calculations may be used in combination with both ToF calculations and TDoA calculations.

In a radar mode of operation, frames are transmitted by at least one device and those frames are received by the same device and/or by one or more other devices. Then, the CIRs are estimated on the device or devices receiving the frames, and the range and/or velocity and/or AoA are calculated based on the estimated CIRs. Thus, AoA calculations may also be performed in the radar mode of operation. A radar mode of operation may be used to advantage to detect (i.e., sense) the presence of objects or human beings. However, a radar mode of operation may also be used to estimate a distance, although with a lower accuracy than the ranging mode of operation will typically achieve. The skilled person will appreciate that the given examples are nonlimiting examples of how the different modes of operation can be implemented. In other words, the modes may be implemented differently, depending on the requirements imposed by the application, for example.

In the embodiment shown in Fig. 3, each UWB anchor 304, 306, 308, 310, 312, 314, 316 may perform ranging operations with a UWB-enabled localization unit included in the mobile device (e.g., a phone), such that the distance between the UWB anchors 304, 306, 308, 310, 312, 314, 316 and the mobile device may be determined in a secure manner. By using multiple UWB anchors 304, 306, 308, 310, 312, 314, 316 at the same time, not only the distance, but also the angle towards the mobile device may be determined. In addition, the UWB anchors 304, 306, 308, 310, 312, 314, 316 allow for more use cases with the existing hardware. For instance, they may be used to perform short distance radar operations. The use cases of such radar operations are, for example, a kick sensor for trunk, passenger seat occupancy detection and child presence detection. The localization unit included in the mobile device may carry out the ranging operations with the UWB anchors 304, 306, 308, 310, 312, 314, 316 and process the output of these operations, in order to determine the location of the mobile device. Alternatively, one of the UWB anchors 304, 306, 308, 310, 312, 314, 316, or a dedicated processor within the vehicle 300, may process the output of the ranging operations and transmit data indicative of the determined location to the mobile device. In both cases, the localization unit included in the mobile device is deemed to have determined the location of the mobile device, i.e., by carrying out the UWB ranging operations with the UWB anchors 304, 306, 308, 310, 312, 314, 316, regardless of whether the output of these operations is processed by the localization unit itself or by a processor within the vehicle 300.

Based on the determined location, the mobile device may adapt its user interface in order to increase both comfort and safety. Furthermore, it may initiate or allow a pairing to take place with a communication interface (not shown) installed within the vehicle 300. For this purpose, the vehicle 300 may also be able to distinguish between the driver's phone and the phones of possible passengers, based on the determined location. Thus, the vehicle may automatically connect the driver phone to the vehicle's hands-free phone system instead of making this connection to the phone of a passenger. Also, the vehicle 300 may trigger the mobile device to change its user interface to a driver mode, based on the determined location. In the driver mode, a less visual and more audio-based user interface may be used, which may also depend on the speed of the vehicle. To further increase the safety level, the driver mode may also block the manual typing of text messages. Instead, the driver mode may default to a voice recording mode and answer incoming text messages with short voice recordings.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: mobile device
- 102: localization unit
- 104: user interface
- 106: processing unit
- 200: method of operating a mobile device
- 202: determining, by a localization unit included in a mobile device, a location of the mobile device within a predefined space
- 204: causing, by a processing unit included in the mobile device, a user interface included in the mobile device to operate in a specific one of different modes of operation in dependence on the location determined by the localization unit
- 300: vehicle
- 302: driver area
- 304: UWB anchor
- 306: UWB anchor
- 308: UWB anchor
- 310: UWB anchor
- 312: UWB anchor
- 314: UWB anchor
- 316: UWB anchor

## Claims

1. A mobile device, comprising:
a localization unit configured to determine a location of the mobile device within a predefined space;
a user interface configured to operate in different modes of operation;
a processing unit configured to cause the user interface to operate in a specific one of said different modes of operation in dependence on the location determined by the localization unit.

2. The mobile device of claim 1, wherein the localization unit is configured to determine said location by performing ultra-wideband, UWB, ranging operations with one or more external UWB communication devices installed within the predefined space.

3. The mobile device of claim 1 or 2, wherein the specific mode of operation is a mode in which the user interface requires less user interaction than in other modes of operation.

4. The mobile device of any preceding claim, wherein the specific mode of operation is a mode in which the user interface presents enlarged visual elements or buttons to a user.

5. The mobile device of any preceding claim, wherein the specific mode of operation is a mode in which the user interface produces audible output instead of, or in addition to, visual output.

6. The mobile device of any preceding claim, wherein the processing unit is further configured to cause the mobile device to be paired with an external device, in particular with an external communication interface, in dependence on the location determined by the localization unit.

7. The mobile device of any preceding claim, further comprising a movement determination unit configured to determine whether the predefined space in which the mobile device is located is a space within a moving object, in particular within a moving vehicle.

8. The mobile device of claim 7, wherein the movement determination unit comprises a global positioning system, GPS, unit and/or an accelerometer.

9. The mobile device of any preceding claim, wherein the predefined space is a space within a vehicle.

10. The mobile device of claim 9, wherein the localization unit is configured to determine whether the location of the mobile device is a driver location or a passenger location, and wherein the processing unit is configured to cause the user interface to operate in a safety mode of operation if the determined location is said driver location.

11. The mobile device of any one of claims 1 to 8, wherein the predefined space is a space within a building.

12. The mobile device of any preceding claim, being implemented as a smartphone or a tablet.

13. A method of operating a mobile device, comprising:
determining, by a localization unit included in the mobile device, a location of the mobile device within a predefined space;
causing, by a processing unit included in the mobile device, a user interface included in the mobile device to operate in a specific one of different modes of operation in dependence on the location determined by the localization unit.

14. The method of claim 13, wherein the localization unit determines said location by performing ultra-wideband, UWB, ranging operations with one or more external UWB communication devices installed within the predefined space.

15. A computer program comprising executable instructions which, when executed by a mobile device, cause said mobile device to carry out the method of claim 13 or 14.
